# EUROPEAN PATENT APPLICATION

(11) **EP 4 600 713 A1**
(43) Date of publication of application: **13.08.2025**
(21) Application number: 22961075.3
(22) Date of filing: 29.09.2022
(51) Int. Cl.: G02B 27/01, G02B 27/42, G06F 3/01, G02B 27/30

(54) **ELECTRONIC DEVICE**

(71) Applicant: LG Electronics Inc., Yeongdeungpo-gu Seoul 07336 (KR)
(72) Inventor: SHIN, Sungchul, Seoul 06772 (KR); LEE, Seunggyu, Seoul 06772 (KR)
(74) Representative: Frenkel, Matthias Alexander
(86) International application number: PCT/KR2022/014617
(87) International publication number: WO 2024/071472

(57) **Abstract**

The present disclosure relates to an electronic device, such as a wearable display, for enabling a wider field of view (FOV), and may provide an electronic device comprising: a transparent substrate; a light source module array provided on a first surface of the transparent substrate and having a plurality of light source modules arranged into a grid structure; an optical array provided on a second surface of the transparent substrate and having a plurality of optical elements arranged so as to correspond to the plurality of light source modules, respectively; and an optical drive unit for controlling the light source module array, wherein external light is provided to a user through spaces between the plurality of light source modules and spaces between the plurality of optical elements, and a light beam from an image generated in the optical drive unit is emitted from the light source module array and provided to the user through the optical array.

## Description

### TECHNICAL FIELD

The present disclosure relates to an electronic device, and more particularly, to an electronic device such as a wearable display used in Virtual Reality (VR), Augmented Reality (AR), Mixed Reality (MR), and the like.

### BACKGROUND ART

Virtual reality (VR) refers to a specific environment, situation, or technology itself that is similar to reality created by artificial technology using computers or the like, but is not real.

Augmented Reality (AR) refers to a technology that synthesizes virtual objects or information in a real environment and makes them look like objects existing in an original environment.

Mixed reality (MR) or hybrid reality refers to creating a new environment or new information by combining a virtual world and a real world. In particular, it is called mixed reality when it refers to something that can interact in real time between real and virtual things.

In this case, the created virtual environment, situation, or the like stimulates user's five senses and allows them to freely enter and exit the boundary between reality and imagination by allowing them to experience space and time similar to the real thing. In addition, users may not only simply immerse themselves in this environment, but also interact with things implemented in this environment, such as manipulating or issuing commands using a real device.

Recently, research on equipment (gear) used in such technical fields is being actively conducted.

Wearable displays producing an image in the air are generally divided into two types. That is, there are a helmet-type wearable display worn on a user's head and a glasses-type wearable display. A helmet-type wearable display has a structure in which an optical lens system has an increased volume so as to produce a large image through an expanded field of view (FOV) and is mounted on a user's head, and is thus referred to as a head mounted display (HMD). Therefore, the helmet-type wearable display is used in professional fields requiring a restricted space with little motion, such as military training (cyber flight training) and cyber games.

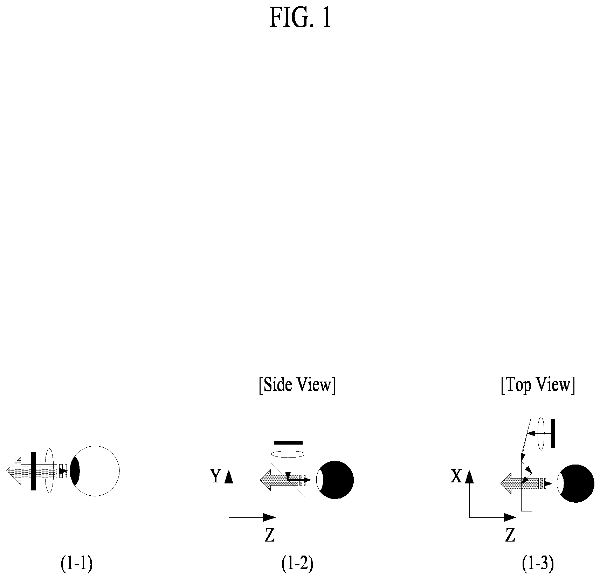

On the other hand, a glasses-type wearable display, as exemplarily shown in FIG. 1, has a lightweight and small-sized structure that is mounted on user's nose and ears like the structure of glasses and is easily used while in motion. Glasses-type wearable displays are divided into three structures.

First, a direct view structure (FIG. 1 (1-1)), in which panel and a lens are fixed in front of the eyes, is most classic and basic in design of a virtual image optical system and is formed in a see-closed type in which a user may see an external view. Therefore, the direct view structure (FIG. 1 (1-1)) needs to recognize an external view in a moving space and is thus disadvantageous.

Second, in order to solve the disadvantage of the direct view structure (FIG. 1 (1-1)), a top-fixed reflection structure (FIG. 1 (1-2)), in which a panel is fixed at the top and a user may see an external view using a partially reflective surface, is provided. However, since the panel and an optical system group are generally fixed in front of the eyes, the top-fixed reflection structure (FIG. 1 (1-2)) is difficult to have a thin thickness as in a general glasses structure and a light weight.

Third, a side-fixed light guide structure (FIG. 1 (1-3)), in which a panel and an optical lens group are moved from the front to side frames at the side of eyes and is similar to a glasses lens using a light guide, is provided.

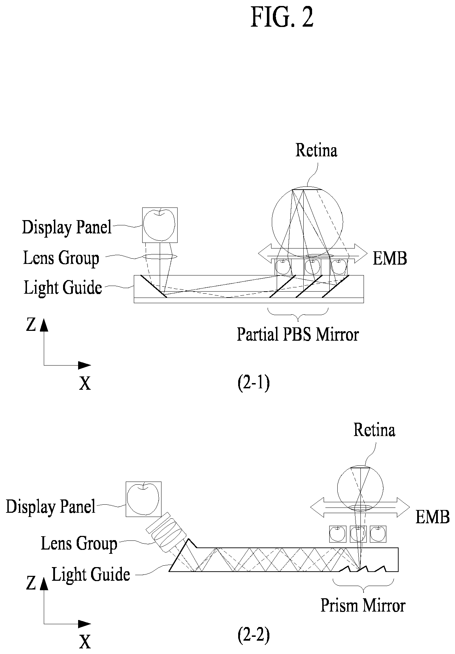

Side-fixed light guide structures (FIG. 1 (1-3)) are divided into a PBS type (FIG. 2 (2-1)) and a prism type (FIG. 2 (2-2)) so as to transmit beams to a pupil through internal reflection of a planar light guide, as exemplarily shown in FIG. 2. Since special partial coating of several tens of layers is performed on respective PBS plane segments and then the segments are bonded so as to uniformly emit beams from respective mirrors and the top-fixed reflection structure (FIG. 2 (2-1)) is formed of a restricted material, such as glass, the top-fixed reflection structure (FIG. 2 (2-2)) is difficult to mass produce using a mold structure. On the other hand, the prism type structure 220 may be manufactured using a mold structure and be easily formed of plastic. However, a lens group is disposed distant from the eyes through total internal reflection and thus the two planar light guide types are limited in extension of an FOV and a PBS or prism pattern is virtually visible.

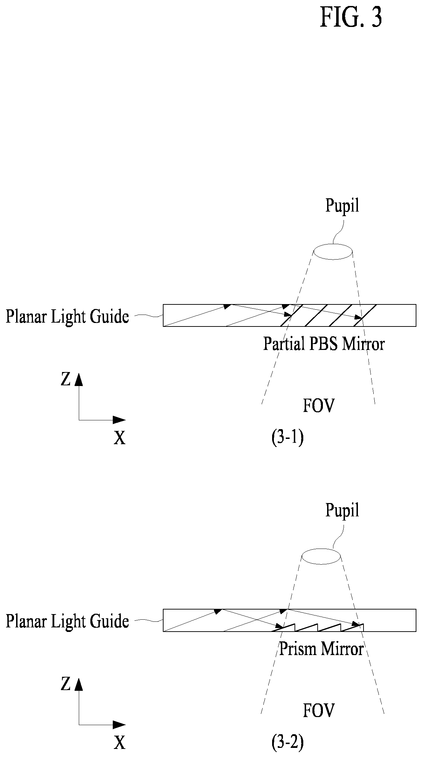

Further, beams are reflected within the effective range of partial PBS mirrors or a prism mirror changing a path to guide the beams to pupils through total internal reflection of a planar light guide and, thus, the conventional methods are limited in the FOV determining the size of an image. As exemplarily shown in FIG. 3, in order to form a range in which beams do not overlap to perform internal reflection, an effective segment partial PBS mirror range (FIG. 3 (3-1)) or a prism mirror range (FIG. 3 (3-2) is restricted in connection with the thickness of the planar light guide. Particularly, since intervals between eyes differ from one person to another and pupils move, an eye motion box (EMB) range to maintain performance of a desired image is considered even in such a change and, thus, there is a severe restriction on increase in the FOV through internal reflection. Moreover, a visual pattern is visible and, thus, the segment partial PBS mirror structure or the prism mirror structure needs to be considered in design.

### DISCLOSURE

### TECHNICAL TASKS

The present disclosure is proposed to solve the aforementioned problems and various related problems, and one technical task of the present disclosure is to provide an electronic device such as a wearable display that allows a wider Field Of View (FOV) and a non-distinct visual pattern in appearance.

### TECHNICAL SOLUTIONS

In one technical aspect of the present disclosure, provided is an electronic device, including a transparent substrate, a light source module array provided on a first surface of the transparent substrate and having a plurality of light source modules arranged in a lattice structure, an optical array provided on a second surface of the transparent substrate and having a plurality of optical elements arranged to correspond to a plurality of the light source modules, respectively, and an optical driving unit controlling the light source module array, wherein an external light may be provided to a user through a space between a plurality of the light source modules and a space between a plurality of the optical elements and wherein a light beam according to an image generated by the optical driving unit may be irradiated from the light source module array and provided to the user through the optical array.

An individual light source module of a plurality of the light source modules may include an external light blocking member for blocking the external light from passing through the light source module and a light source device configured to irradiate the light beam.

The individual light source module may further include a collimating lens for preventing the irradiated light beam from being dispersed and the light source device may be in contact with the transparent substrate with the collimating lens interposed therebetween.

The external light blocking member may have a cap shape covering the light source device and the collimating lens.

Optical characteristics of the collimating lens may be the same for all the light source modules.

The transparent substrate may be disposed such that the second surface faces the user.

The optical element may include a lens and an optical characteristic of the lens may be determined based on a position of the optical element.

The optical element may include a pinhole formed in a layer polarized in a first direction.

The light source module array may irradiate a light beam polarized in a second direction orthogonal to the first direction.

The transparent substrate may be disposed such that the first surface faces the user.

The optical element may include a reflective lens and an optical characteristic of the reflective lens may be determined based on a position of the optical element.

An interval between a plurality of the light source modules may increase as it moves toward the outside from a center of the light source module array.

The transparent substrate may be planar or have a prescribed curvature.

Each of the optical elements may be aligned to the light source module therefor in a radial direction toward the transparent substrate from a pupil of the user.

The optical array may include a Diffractive Optical Element (DOE) or a Holographic Optical Element (HOE).

The electronic device may further include a front frame having the transparent substrate disposed thereon and a side frame having the optical driving unit disposed thereon.

The electronic device may further include an image division circuit configured to divide the image generated by the optical driving unit and transmit the divided image to an individual light source module.

A scale of the lattice structure may be determined based on at least one of a distance between the light source module array and a user pupil, a pupil size, or an optical wavelength band.

The light source device may include a Liquid Crystal On Silicon (LCOS) device, a Liquid Crystal Display (LCD) device, an Organic Light Emitting Diode (OLED) device, a Digital Micromirror Device (DMD), a micro Light Emitting Diode (LED) device, and a Quantum Dot (QD) LED device.

The electronic device may include a wearable display.

### ADVANTAGEOUS EFFECTS

Effects of the electronic device according to the present disclosure will be described as follows.

According to at least one of the various aspects of the present disclosure, there is an advantage of making it possible to implement a wearable display that allows a wider Field Of View (FOV) and a non-distinct visual pattern in appearance.

### DESCRIPTION OF DRAWINGS

FIG. 1 is a view illustrating examples of glasses-type wearable displays.
FIG. 2 is a view illustrating examples of planar light guide-type wearable displays.
FIG. 3 is a view illustrating Field Of Views (FOVs) of planar light guide-type wearable displays.
FIG. 4 is a cross-sectional diagram illustrating an optical driving unit and a display unit of an electronic device according to an embodiment of the present disclosure.
FIG. 5 and FIG. 6 illustrate an optical path change area according to an embodiment of the present disclosure.
FIG. 7 is a cross-sectional diagram illustrating a display unit of an electronic device according to an embodiment of the present disclosure.
FIG. 8 is a cross-sectional diagram illustrating a display unit of an electronic device according to an embodiment of the present disclosure.
FIG. 9 is a perspective diagram illustrating an electronic device according to an embodiment of the present disclosure.
FIG. 10 is a cross-sectional diagram illustrating a display unit of an electronic device according to an embodiment of the present disclosure.
FIG. 11 is a diagram illustrating a plan view of a display unit of the electronic device of FIG. 10.
FIG. 12 is an enlarged cross-sectional diagram illustrating a display unit of an electronic device according to an embodiment of the present disclosure.
FIG. 13 is a cross-sectional diagram illustrating a display unit of an electronic device according to an embodiment of the present disclosure.
FIG. 14 is a diagram illustrating a plan view of a display unit of the electronic device of FIG. 13.
FIG. 15 is a cross-sectional diagram illustrating a display unit of an electronic device according to an embodiment of the present disclosure.
FIG. 16 is a diagram illustrating a plan view of a display unit of the electronic device of FIG. 15.
FIG. 17 and FIG. 18 are enlarged cross-sectional diagrams illustrating a display unit of an electronic device according to an embodiment of the present disclosure.
FIG. 19 is a diagram illustrating a cross-sectional view and a plan view of a display unit of an electronic device according to an embodiment of the present disclosure.

### MODE FOR INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized..

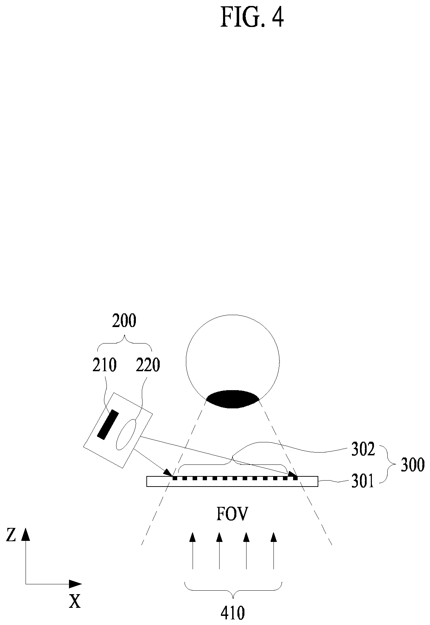

FIG. 4 is a cross-sectional diagram illustrating an optical driving unit and a display unit of an electronic device according to an embodiment of the present disclosure.

Referring to FIG. 4, an electronic device 10 according to the present disclosure may include an optical driving unit 200 and a display unit 300

The optical driving unit 200, which is for controlling various electronic components provided in the electronic device 10, may include an image source panel 210 and a lens unit 220 for diffusing and/or converging light generated from the image source panel 210. The image source panel 210 may generate a light beam for displaying an image. The light beam may be a light beam that generates a 2D image or a 3D image. The 3D image may include at least one of a stereo image or a multi-view image. The lens unit 220 may include at least one lens, and the lens may include at least one of a glass lens, a plastic lens, and a liquid crystal lens. The lens unit 220 serves to allow the image, which is generated by the image source panel 210, to be viewed as a virtual image by a user. The lens unit 220 may be located between the image source panel 210 and the display unit 300.

As shown in FIG. 4, the image source panel 210 and the lens unit 220 may be spaced apart from the display unit 300 and disposed in a lateral direction thereof.

The display unit 300 may allow the user to see the image generated by the optical driving unit 200 and an external view at the same time.

To this end, the display unit 300 may include a transparent substrate 301 and an optical path change area 302 formed on one surface of the transparent substrate 301. The optical path change area 302 may be understood as a kind of optical array. The one surface may refer to a surface of the transparent substrate 301, which is closer to the pupil of the user. The transparent substrate 301 may be formed as a planar surface or a surface having a prescribed curvature. The transparent substrate 301 may include at least one of a glass substrate, a plastic substrate, and a metal substrate. At least one of a size and position of the optical path change area 302 may be determined based on a viewing angle (FOV) of the user. The optical path change area 302 will be described further later.

The optical driving unit 200 may directly irradiate the light beam generated by the image source panel 210 to the optical path change area 302 of the display unit 300. That is, the optical driving unit 200 may irradiate the light beam obliquely to the optical path change area 302 from one side direction of the display unit 300. The light beam may be irradiated directly to the optical path change area 302 without passing through the transparent substrate 301. In this case, the lens unit 220 of the optical driving unit 200 may allow the light beam to be incident on the optical path change area 302 by being limited thereto.

One part of the optical path change area 302 may be configured to reflect the light beam at a predetermined level or more in a pupil direction (Z direction) of the user. The one part may be opaque to block an external light 410 incident from the outside, or may be translucent so that only some of the external light 410 is transmitted. The other part of the optical path change area 302 may be configured not to reflect the light beam in the pupil direction of the user while transmitting the external light 410.

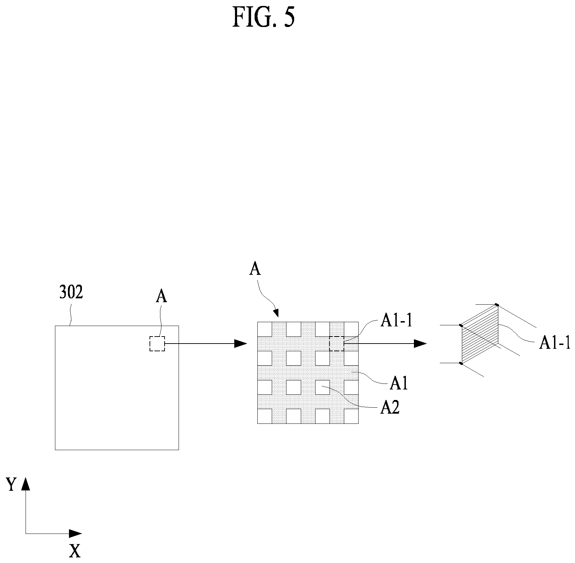

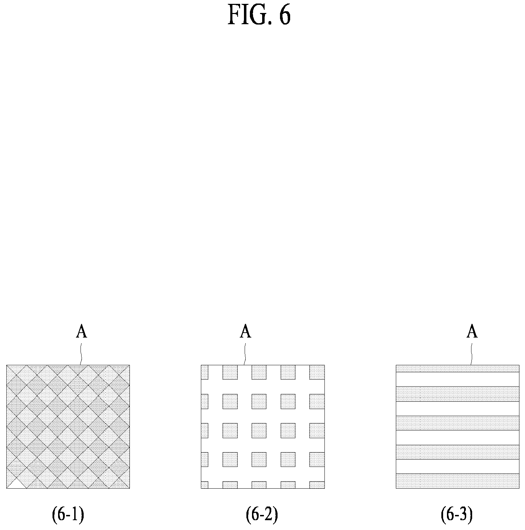

To this end, the optical path change area 302 may be configured in a uniform pattern shape. This will be described further with reference to FIG. 5 and FIG. 6. FIG. 5 and FIG. 6 illustrate an optical path change area according to an embodiment of the present disclosure.

The optical path change area 302 may include a coating area A1 for reflecting the light beam and a non-coating area A2 that is not coated so that the light beam is not reflected.

As shown in FIG. 5, the coated area A1 and the non-coated area A2 may have a fine and uniform pattern shape in the optical path change area 302. Therefore, when the electronic device 10 is worn close to a user's pupil, the user may hardly recognize the pattern shape of the optical path change area 302.

In FIG. 5, the pattern shape is illustrated as a net or grid shape, but is not limited thereto, and various periodic pattern shapes may be used. In FIG. 6 (6-1), the pattern shape is illustrated as a diamond pattern shape, in FIG. 6 (6-2), the pattern shape is illustrated as a chessboard pattern shape, and in FIG. 6 (6-3), the pattern shape is illustrated as a stripe pattern shape, but is not limited thereto.

A scale of the pattern shape may vary from several tens of micrometers to several millimeters depending on at least one of a distance between the optical path change area 302 and the user's pupils, a pupil size, and an optical wavelength band.

As a coating material in the coating area A1, a reflective mode material may be applied. The coating material may include a material for partial mirror coating and coating in a special wavelength band.

The lattice of the periodic pattern shape may correspond to the coating area A1, and a space between the lattices may correspond to the non-coating area A2, *and vice versa.*

A Diffractive Optical Element (DOE) pattern A1-1 for changing an optical path of the light beam so that the light beam is reflected in the pupil direction (Z-direction) of the user may be provided in the coating area A1. Instead of the DOE pattern, Holographic Optical Element (HOE) pattern is provided in the coating area A1, so that an optical path of the light beam may be changed in the pupil direction of the user.

In the case of the electronic device 10 according to FIG. 4, since total internal reflection in the transparent substrate 301 is not used, a thin glass lens structure is possible. Also, since the optical path may be changed in a desired direction by adjusting an optical path change angle of the DOE or HOE pattern within the optical path change area 302, a wide viewing angle FOV may be secured.

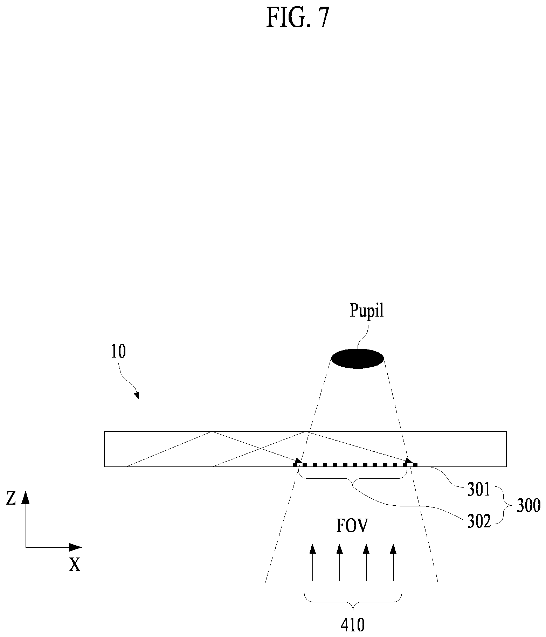

In the above description, it has been described that the light beam generated by the image source panel 210 is directly irradiated to the optical path change area 302 of the display unit 300 without passing through the transparent substrate 301. However, the electronic device 10 may be configured such that the light beam generated by the image source panel 210 passes through the transparent substrate 301 and is then irradiated to t the optical path change area 302 of the display unit 300. This will be described further with reference to FIG. 7. FIG. 7 is a cross-sectional diagram illustrating a display unit of an electronic device according to an embodiment of the present disclosure. In FIG. 7, the optical driving unit 200 is omitted for convenience of illustration.

Referring to FIG. 7, the transparent substrate 301 of the display unit 300 of the electronic device 10 may serve as the planar light guide.

The light beam generated by the optical driving unit may be irradiated inward from the side of the transparent substrate 301 and guided within the transparent substrate 301 through total internal reflection.

The optical path change area 302 described above may be provided on one surface of the transparent substrate 301. The one surface may refer to a surface far from a pupil of a user among both surfaces of the transparent substrate 301. At least one of the size and position of the optical path change area 302 may be determined based on the viewing angle FOV of the user, as described above.

The guided light beam reaching the optical path change area 302 may be reflected in a direction of the user's pupil.

As described above, the reflected light beam may be visible to the user together with the external view 410.

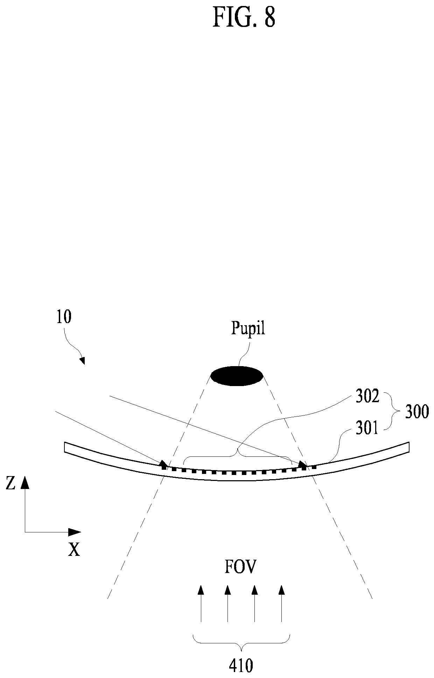

Meanwhile, the transparent substrate 301 of the display unit 300 of the electronic device 10 of FIG. 4 may be formed of a curved surface. This will be described further with reference to FIG. 8. FIG. 8 is a cross-sectional diagram illustrating a display unit of an electronic device according to an embodiment of the present disclosure. For convenience of illustration, the optical driving unit 200 is omitted in FIG. 8.

Referring to FIG. 8, the transparent substrate 301 of the display unit 300 of the electronic device 10 may be formed of a curved surface.

An optical path change area 302 may be formed on one surface of the transparent substrate 301. The one surface may refer to an inner surface of both surfaces of the transparent substrate 301, that is, a surface closer to the user's pupil. As described above, at least one of the size and position of the optical path change area 302 may be determined based on a user's viewing angle FOV.

As described above, the optical driving unit directly irradiates the light beam generated by the image source panel to the optical path change area 302 of the display unit 300, and the optical path change area 302 reflects the light beam in the direction of the user's pupil.

In case of using the electronic device 10, as shown in FIG. 8, it may be manufactured in a structure that is easy to secure a viewing angle or optical performance while reducing an optical path distance between the pupil and the optical driver, and may be applied to the existing glasses-type structure, thereby implementing the electronic device 10 capable of providing more convenience to glasses wearers or sunglasses users.

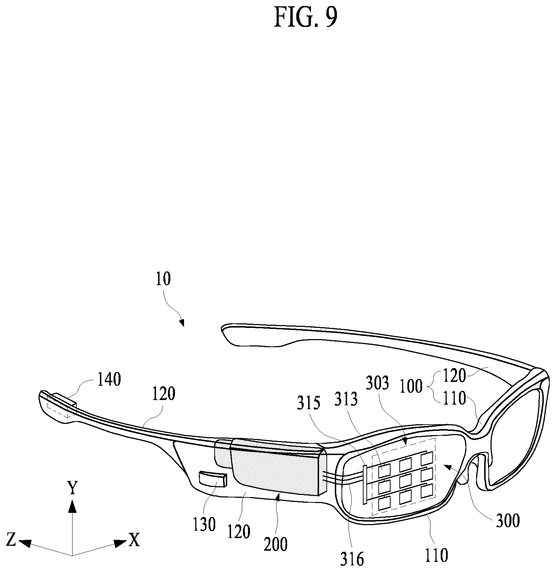

In the above description, it has been described that the image source panel 210 and the lens unit 220 are disposed to be spaced apart from the display unit 300. By the way, the image source panel 210 and the lens unit 220 may be integrally formed with the display unit 300. This will be described further with reference to FIG. 9. FIG. 9 is a perspective diagram illustrating an electronic device according to an embodiment of the present disclosure.

As shown in FIG. 9, an electronic device 10 may include a frame 100, an optical driving unit 200, and a display unit 300.

The electronic device 10 may be provided in a glass type (smart glass). The glass-type electronic device 10 is configured to be worn on a head of a human body, and may include a frame (e.g., case, housing, etc.) 100 for this purpose. The frame 100 may be formed of a flexible material to be easily worn.

The frame 100 is supported by a head part and provides a space in which various components are mounted. As shown in FIG. 9, electronic components such as an optical driving unit 200, a user input unit 130, a sound output unit 140, and the like may be mounted on the frame 100. Also, a lens that covers at least one of left and right eyes may be detachably mounted on the frame 100.

As shown in FIG. 9, the frame 100 may have the form of glasses worn on a face of a user's body, but is not necessarily limited thereto, and may have the form of goggles or the like worn in close contact with a user's face.

Such a frame 100 may include a front frame 110 having at least one opening and a pair of side frames 120 extending in a first direction y that crosses the front frame 110.

The optical driving unit 200 may control various electronic components provided in the electronic device 10. Unlike the electronic device of FIG. 4, the optical driving unit 200 may not include an image source panel and a lens unit. This will be described later.

The optical driving unit 200 may be fixed to any one of the two side frames 120. For example, the optical driving unit 200 may be fixed to an inside or outside of any one of the side frames 120 or may be embedded in any one of the side frames 120 to be integrally formed. Alternatively, the optical driving unit 200 may be fixed to the front frame 110 or may be provided separately from the electronic device 10.

The display unit 300 may be implemented in the form of a Head Mounted Display (HMD). The HMD form refers to a display mechanism mounted on a head part to directly display an image in front of user's eyes. When a user wears the electronic device 10, the display unit 300 may be disposed to correspond to at least one of the left eye and the right eye so as to directly provide an image in front of the user's eye(s). In FIG. 9, it is illustrated that the display unit 300 is located at a portion corresponding to the right eye so that an image may be outputted toward the user's right eye.

The display unit 300 may allow a user to visually recognize an external view and simultaneously see an image generated under the control of the optical driving unit 200.

The electronic device 10 may include a display area 303 on the display unit 300, instead of the image source panel 210 of FIG. 4. The display area 303 may be configured as a light source module array. Each light source module 313 in the light source module array 303 may include a light source device implementing a single pixel, or may include a light source device implementing hundreds to thousands of pixel clusters. The light source device may be understood as a micro light source device.

The light source device may include a Liquid Crystal on Silicon (LCoS) device, a Liquid Crystal Display (LCD) device, an Organic Light Emitting Diode (OLED) device, a Digital Micromirror Device (DMD), etc. and also include a next-generation display device such as a micro Light Emitting Diode (LED), a Quantum Dot (QD) LED, etc.

Image data generated by the optical driving unit 200 is transmitted to the light source module array 303 as an image signal along a conductive input line 316, and the light source module array 303 may convert the image signal into light and irradiate it to user's eyes.

A plurality of the light source modules 313 constituting the light source module array 303 may be arranged in a lattice structure. A scale of the lattice structure may vary depending on at least one of a distance between the light source module array 303 and a user's pupil, a pupil size, an optical wavelength band, and the like. Since a plurality of the light source modules 313 are implemented in a lattice structure to have a fine size, a wide viewing angle FOV may be provided without impairing the aesthetics of the electronic device 10.

The image signal generated by the optical driving unit 200 is transmitted to an image division circuit 315 provided at one side of the display area 303 through the conductive input line 316, and is divided into a plurality of branches in the image division circuit 315 so as to be transmitted to the light source module 313 disposed for each of the branches. The image division circuit 315 may be positioned outside a user's visual range to minimize gaze interference. Each of the divided images generated by the image division circuit 315 is outputted by the individual light source module 313, and the divided images may implement a single image as a whole.

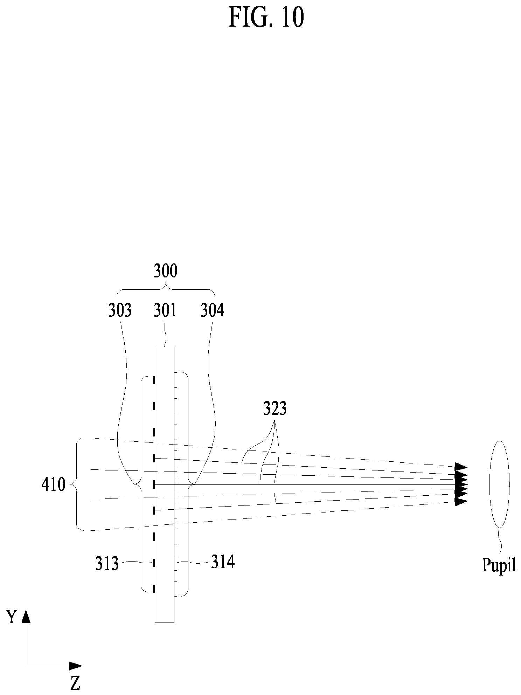

Hereinafter, the display unit 300 will be described further with reference to FIG. 10. FIG. 10 is a cross-sectional diagram illustrating a display unit of an electronic device according to an embodiment of the present disclosure.

The light source module array 303 may be provided on a first surface of a transparent substrate 301 of the display unit 300. The first surface may be one surface farther from a user. The light source module array 303 may include a plurality of light source modules 313 arranged in a lattice structure.

A distance between a plurality of the light source modules 313 in the light source module array 303 may be uniform. Alternatively, a distance between a plurality of the light source modules 313 may gradually increase as it moves outward from a center of the light source module array 303.

The light source module 303 may output the divided image 323 to have directivity in a user direction.

The light source device of the light source module 303 may be configured to have a size of hundreds of micrometers or less, and may be configured to have a special wavelength band as well as a visible light range depending on a usage.

The light source module array 303 may be configured to have a prescribed light beam orientation angle in a uniform pattern shape, and each of the light source modules may have a structure that blocks light from an external direction. The pattern shape may be a grid shape, a diamond pattern shape, or a chessboard pattern shape as described above.

Meanwhile, a lens array 304 may be provided on a second surface of the transparent substrate 301 of the display unit 300. The lens array 304 may be understood as a kind of optical array. As a surface opposite to the first surface, the second surface may be one surface closer to a user. The lens array 304 may include a plurality of lenses 314 arranged in a lattice structure. The lens 314 may be understood as a kind of optical element. For example, the lens may include a micro lens. The lens may include a Fresnel lens, or a HOE or DOE lens.

A plurality of the light source modules 313 may 1-to-1 correspond to a plurality of the lenses 314, respectively. That is, each lens may be aligned with each light source module in a radiation direction from a user's pupil toward the display unit 300. Accordingly, the divided image 323 from each of the light source modules 303 may be outputted to the user's pupil through each of the lenses 314. Simultaneously, external light 410 incident from the outside may be incident to the pupil of the user through a space between a plurality of the light source modules 313 and a space between a plurality of the lenses 314. Accordingly, the display unit 300 may allow the user to visually recognize an external view and simultaneously see an image generated under the control of the optical driving unit 200.

A plurality of the light source modules 313 may serve as the image source panel 210 of the electronic device 10 of FIG. 4, and a plurality of the lenses 314 may serve as the lens unit 220 of the electronic device 10 of FIG. 4.

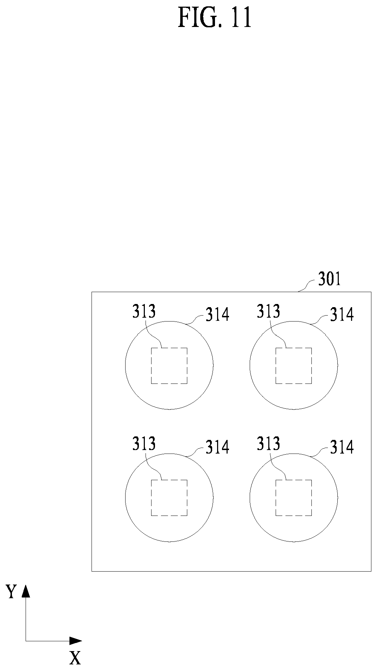

The light source module array 303 and the lens array 304 will be described further with reference to FIG. 11. FIG. 11 is a diagram illustrating a plan view of the display unit of the electronic device of FIG. 10. In FIG. 11, a partial plane facing the second surface of the transparent substrate 301 is illustrated.

As shown in FIG. 11, a plurality of the light source modules 313 may 1-to-1 correspond to a plurality of the lenses 314, respectively. That is, each of the lenses 314 may be aligned with each of the light source modules 313 in a radiation direction from a user's pupil toward the display unit 300. Accordingly, a divided image from each light source module may be outputted to the user's pupil through each lens. Optical characteristics of each of the lenses 314 may be different such that the divided image of the corresponding light source module faces the user's pupil according to a position thereof. Simultaneously, external light incident from the outside may be incident to the user's pupil through a space between a plurality of the light source modules 313 and a space between a plurality of the lenses 314.

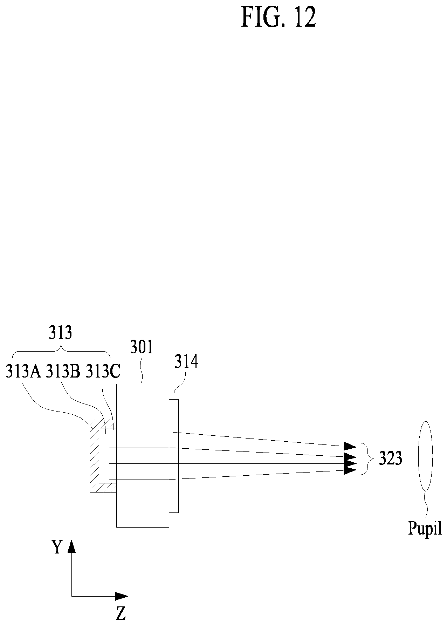

Hereinafter, the light source module 313 of FIG. 10 will be described in more detail with reference to FIG. 12. FIG. 12 is an enlarged cross-sectional diagram illustrating a display unit of an electronic device according to an embodiment of the present disclosure.

As shown in FIG. 12, the light source module 313 may include an external light blocking member 313A, a light source device 313B, and a collimating lens 313C. The light source device 313B is in contact with the transparent substrate 301 with the collimating lens 313C interposed therebetween, and the external light blocking member 313A may have a cap shape that covers the light source device 313B and the collimating lens 313C.

The external light blocking member 313A may block external light from passing through the light source module 313.

The light source device 313B may output or irradiate a light beam 323 corresponding to the divided image to have directivity in a direction of the transparent substrate 301.

The collimating lens 313C prevents the light beams 323 outputted from the light source device 313B from being formed in parallel so as not to be dispersed in an undesired direction. The optical characteristics of the collimating lens 313C may be common to all the light source modules 313, or may be different to form a light beam in parallel with the corresponding lens 314 according to a position thereof. The collimating lens 313C may be configured as a Fresnel lens or a HOE or DOE lens. A diameter of the individual lens 313 may be smaller than a size of the individual light source module 313 owing to the collimating lens 313C.

The light beam 323 having passed through the collimating lens 313C passes through the transparent substrate 301 and the corresponding lens 314 of the lens array 304 in order.

If the transparent substrate 301 is thin and the distance between the light source module 313 and the corresponding lens 314 is close, it is a matter of course that the collimating lens 313C may be omitted.

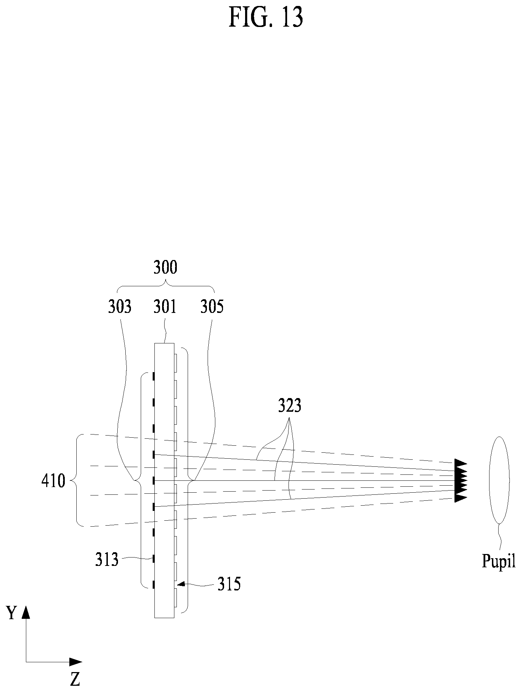

Meanwhile, in the electronic device 10, a pinhole array may be used instead of the lens array 304. This will be described further with reference to FIG. 13. FIG. 13 is a cross-sectional diagram illustrating a display unit of an electronic device according to an embodiment of the present disclosure.

The light source module array 303 may be provided on a first surface of the transparent substrate 301 of the display unit 300. The first surface may be one surface farther from a user. The light source module array 303 may include a plurality of light source modules 313 arranged in a lattice structure.

A distance between a plurality of the light source modules 313 in the light source module array 303 may be uniform. Alternatively, a distance between a plurality of the light source modules 313 may gradually increase as it moves outward from a center of the light source module array 303.

The light source module 303 may output the divided image 323 to have directivity in a direction of the user. However, the output divided image may be an image polarized in a first direction. Although not shown, to this end, the light source module 303 may output the divided image through a layer (e.g., film or coating) polarized in the first direction.

The light source device of the light source module 303 may be configured to have a size of hundreds of micrometers or less, and may be configured to have a special wavelength band as well as a visible light range according to a usage.

The light source module array 303 may be configured to have a prescribed light beam orientation angle in a uniform pattern shape, and each light source module may have a structure that blocks light from an external direction. The pattern shape may be a grid shape, a diamond pattern shape, or a chessboard pattern shape as described above.

In the case of the light source module 303, a layer polarized in the first direction (e.g., film or coating (not shown)) may be formed between the light source device 313B and the collimating lens 313C, or between the collimating lens 313C and the transparent substrate 301.

Meanwhile, a pinhole array 305 may be provided on a second surface of the transparent substrate 301 of the display unit 300. The pinhole array 305 may be understood as a kind of optical array. The second surface is a surface opposite to the first surface and may be one surface closer to the user. The pinhole array 305 is a layer (e.g., film or coating) polarized in a second direction orthogonal to the first direction, and a plurality of pinholes 315 may be formed in a lattice structure. The pinhole 315 may be understood as a kind of optical element.

Each of a plurality of the light source modules 313 may correspond to each of a plurality of the pinholes 315. That is, each of the pinholes 315 may be aligned with each of the light source modules 313 in a radiation direction from a pupil of a user toward the display unit 300. Accordingly, a divided image 323 from each of the light source modules 313 may be outputted to the pupil of the user through each of the pinholes 315. Simultaneously, an external light 410 incident from the outside may be incident on the user's pupil through a space between a plurality of the light source modules 313 and a layer polarized in the second direction of the pinhole array 305. Since the image polarized in the first direction is unable to pass through the layer polarized in the second direction, the user may view the image based on the pinhole effect. The pinhole is a term derived from the fact that a hole facing an object is the same as being perforated by a pin, and the pinhole effect refers to an effect that Depth Of Field (DOF) of a light having passed through a small hole increases to provide a clear image.

Therefore, the display unit 300 may allow the user to visually recognize an external view and simultaneously see an image generated under the control of the optical driving unit 200.

A plurality of the light source modules 313 may serve as the image source panel 210 of the electronic device 10 of FIG. 4, and a plurality of the pinholes 315 may serve as the lens unit 220 of the electronic device 10 of FIG. 4.

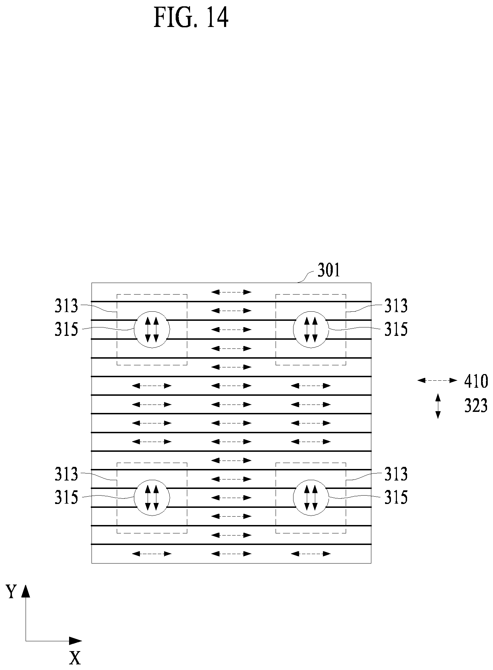

The light source module array 303 and the pinhole array 305 will be described with reference to FIG. 11. FIG. 14 is a diagram illustrating a plan view of a display unit of the electronic device of FIG. 13. In FIG. 14, a partial plane facing the second surface of the transparent substrate 301 is illustrated.

As illustrated in FIG. 14, a plurality of the light source modules 313 may 1-to-1 correspond to a plurality of the pinholes 314, respectively. That is, each of the pinholes 315 may be aligned with each of the light source modules 313 in a radiation direction from a pupil of a user toward the display unit 300. Accordingly, the divided image 323 polarized in the first direction from each of the light source modules 315 may be outputted to the pupil of the user through each of the pinholes 315. Simultaneously, an external light 410 incident from the outside may be incident to the pupil of the user through a space between a plurality of the light source modules 313 and a layer polarized in the second direction of the pinhole array 305.

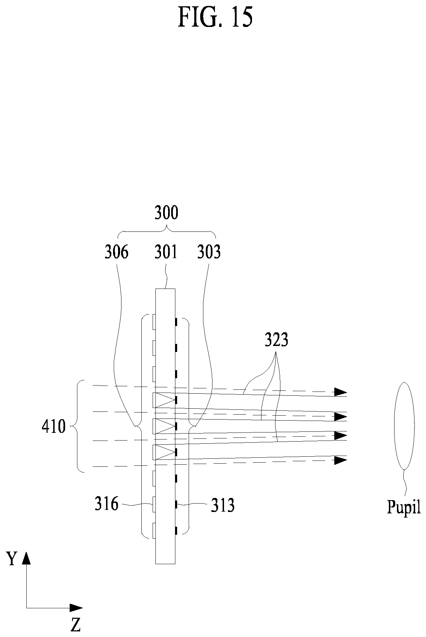

In the above description, the electronic device 10 is configured such that the light source module array 303 is provided on the first surface of the transparent substrate, that is, one surface farther from the user, and each of the light source modules 313 of the light source module array 303 irradiates the light beam of the divided image 323 to have directivity in the user direction. By the way, in the above description, the electronic device 10 may be configured such that the light source module array 303 is provided on the second surface of the transparent substrate, that is, one surface closer to the user, and each of the light source modules 313 of the light source module array 303 irradiates the light beam of the divided image 323 in a direction opposite to the user direction. This will be described further with reference to FIG. 15. FIG. 15 is a cross-sectional diagram illustrating a display unit of an electronic device according to an embodiment of the present disclosure.

The light source module array 303 may be provided on a second surface of the transparent substrate 301 of the display unit 300. The second surface may be one surface closer to a user. The light source module array 303 may include a plurality of light source modules 313 arranged in a lattice structure.

A distance between a plurality of the light source modules 313 in the light source module array 303 may be uniform. Alternatively, a distance between a plurality of the light source modules 313 may gradually increase as it moves outward from a center of the light source module array 303.

The light source module 303 may output the divided image 323 to have directivity in a direction opposite to the user direction.

The light source device of the light source module 303 may be configured to have a size of hundreds of micrometers or less, and may be configured to have a special wavelength band as well as a visible light range according to a usage.

The light source module array 303 may be configured to have a prescribed light beam orientation angle in a uniform pattern shape, and each of the light source modules may have a structure to block a light beam in a user direction. The pattern shape may be a grid shape, a diamond pattern shape, or a chessboard pattern shape as described above.

Meanwhile, a reflective mirror array 306 may be provided on a first surface of the transparent substrate 301 of the display unit 300. The reflective mirror array 306 may be understood as a kind of optical array. The first surface may be a surface opposite to the second surface, it may be one surface far from the user. The reflective mirror array 306 may include a plurality of reflective mirrors 316 arranged in a lattice structure. The reflective mirror 316 may be understood as a kind of optical element. For example, the reflective mirror 316 may be a micro reflective mirror. Each of a plurality of the reflective mirrors 316 may be configured as a reflective lens. The reflective lens may be configured as a Fresnel lens, or may be configured as a HOE or DOE lens. Since a plurality of the reflective mirrors 316 are implemented in a lattice structure in a fine size, the aesthetics of the electronic device 10 are not impaired.

A plurality of the light source modules 313 may 1-to-1 correspond to a plurality of reflective mirrors 316. That is, each of the reflective mirrors may be aligned with each of the light source modules in a radiation direction from a pupil of a user toward the display unit 300. Accordingly, the divided image 323 from each of the light source modules 313 may be reflected by each of the reflective mirrors 315 and outputted to the pupil of the user. Simultaneously, an external light 410 incident from the outside may be incident on the user's pupil through a space between a plurality of the light source modules 313 and a space between a plurality of the reflective mirrors 316. Accordingly, the display unit 300 allows the user to visually recognize an external view and simultaneously see an image generated under the control of the optical driving unit 200.

A plurality of the light source modules 313 may serve as the image source panel 210 of the electronic device 10 of FIG. 4, and a plurality of the reflective mirrors 316 may serve as the lens unit 220 of the electronic device 10 of FIG. 4.

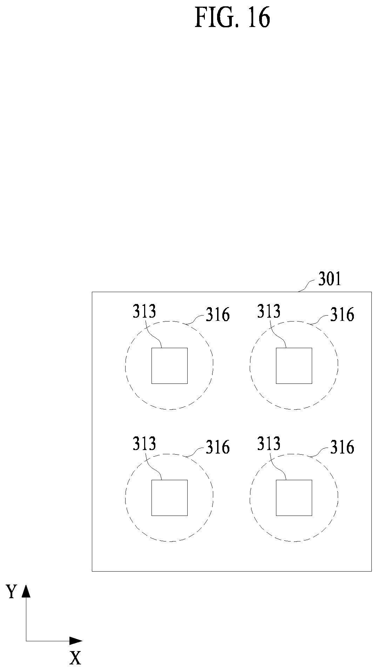

The light source module array 303 and the reflective mirror array 316 will be described with reference to FIG. 16. FIG. 16 is a diagram illustrating a plan view of the display unit of the electronic device of FIG. 15. In FIG. 16, a partial plane facing a second surface of the transparent substrate 301 is illustrated.

As shown in FIG. 16, a plurality of the light source modules 313 may 1-to-1 correspond to a plurality of the reflective mirrors 316, respectively. That is, each of the reflective mirrors 316 may be aligned with each of the light source modules 313 in a radiation direction from a user's pupil toward the display unit 300. Accordingly, the divided image from each of the light source modules may be reflected by each of the reflective mirrors and outputted to the user's pupil. Optical characteristics of the reflective lens of each of the reflective mirrors 316 may vary so that the divided image of the corresponding light source module is reflected according to a position thereof and is then directed to the user's pupil. Simultaneously, an external light incident from the outside may be incident to the user's pupil through a space between a plurality of the light source modules 313 and a space between a plurality of the reflective mirrors 316.

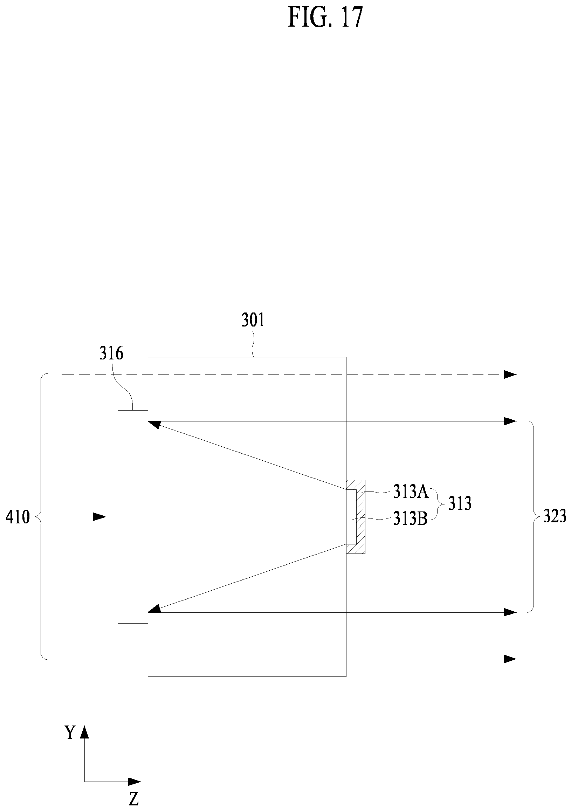

Hereinafter, the light source module 313 of FIG. 15 will be described in more detail with reference to FIG. 17. FIG. 17 is an enlarged cross-sectional diagram illustrating a display unit of an electronic device according to an embodiment of the present disclosure.

As shown in FIG. 17, the light source module 313 may include an external light blocking member 313A and a light source device 313B. The light source device 313B is in contact with the transparent substrate 301, and the external light blocking member 313A may have a cap shape covering the light source device 313B.

The external light blocking member 313A may have a structure in which the light beam 323 from the light source device 313B is blocked in a user direction.

The light source device 313B may output a light beam 323 corresponding to the divided image to have directivity in a direction of the reflective mirror 316.

The light beam 323 from the light source device 313B may pass through the transparent substrate 301, be reflected by the reflective mirror 316, pass through the transparent substrate 301 again, and be then directed to the user pupil.

An external light 410 incident from the outside may be completely or partially blocked by the reflective mirror 316.

A size (e.g., tens to hundreds of micrometers) of the reflective mirror 316 may be configured to be smaller than a normal user pupil size (e.g., several millimeters). A size (e.g., less than several tens of micrometers) of the light source module 313 may be configured to be smaller than that of the reflective mirror 316.

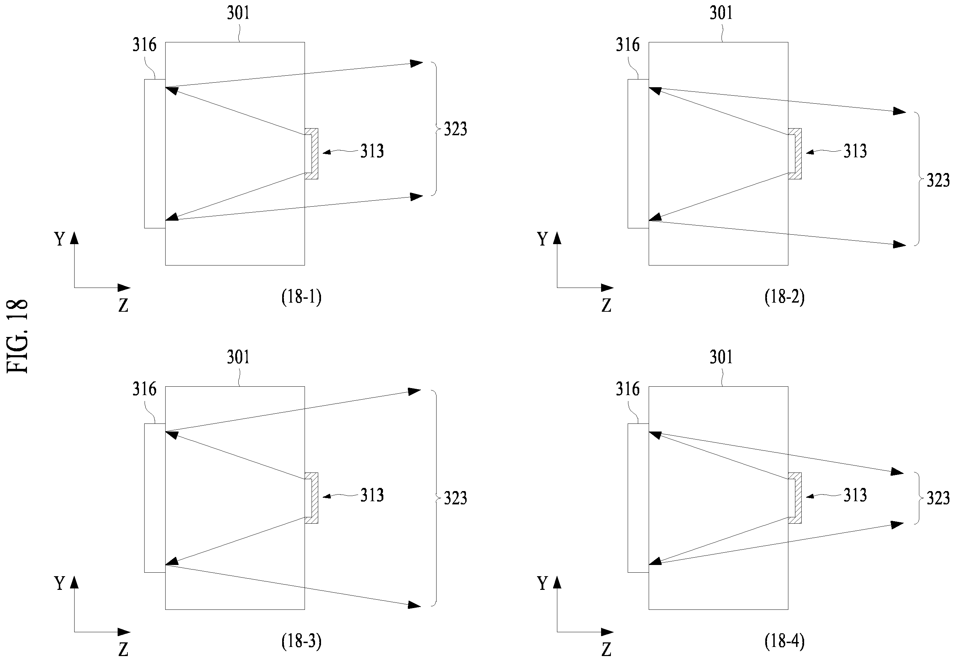

Hereinafter, optical characteristics of the reflective mirror 316, that is, the reflective lens, will be described in more detail with reference to FIG. 18. FIG. 18 is an enlarged cross-sectional diagram illustrating a display unit of an electronic device according to an embodiment of the present disclosure.

As shown in FIG. 18 (18-1) and FIG. 18 (18-2), the reflective mirror 316 may change a path of the light beam 323 from the light source module 313 according to a first optical characteristic. The reflective mirror 316 may change only a path of light in some directions y and/or a path of light of some wavelengths.

As shown in FIG. 18 (18-3) and FIG. 18 (18-4), the reflective mirror 316 may allow a light beam 323 from the light source module 313 to spread or gather, i.e., a focal length to vary according to a second optical characteristic.

At least one of the first optical characteristic and the second optical characteristic of the reflective lens of each of the reflective mirrors 316 may differ according to its position so that the divided image of the corresponding light source module is reflected and directed toward the a user pupil.

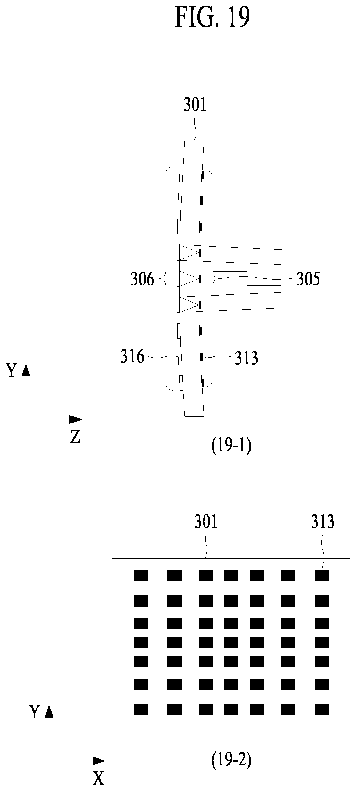

In the above description, the light source module array 303 and the reflective mirror array 306 are provided on the planar transparent substrate 301. However, the light source module array 303 and the reflective mirror array 306 may be provided on a transparent substrate having a prescribed curvature. This will be described further with reference to FIG. 19. FIG. 19 illustrates a cross-sectional view and a plan view of a display unit of an electronic device according to an embodiment of the present disclosure.

As shown in FIG. 19 (19-1), the light source module array 303 may be provided on a second surface (i.e., one surface closer to a user) of a transparent substrate 301 having a prescribed curvature of the display unit 300.

A distance between a plurality of the light source modules 313 in the light source module array 303 may be uniform. Alternatively, as illustrated in FIG. 19 (19-2), the distance between a plurality of the light source modules 313 may gradually increase as it moves outward from a center of the light source module array 303. A degree to which the distance gradually increases may vary according to at least one of the curvature and the angle of view of the image.

A reflective mirror array 306 may be provided on a first surface (i.e., one surface far from the user) of the transparent substrate 301 of the display unit 300.

A plurality of the light source modules 313 may 1-to-1 correspond to a plurality of the reflective mirrors 316, respectively. That is, each reflective mirror may be aligned with each light source module in a radiation direction from a pupil of a user toward the display unit 300.

The above detailed description should not be construed in all respects restrictively but should be considered illustrative. The scope of the present disclosure should be determined by reasonable interpretation of the appended claims, and all changes within the equivalent scope of the present disclosure are included in the scope of the present disclosure.

## Claims

1. An electronic device, comprising:
a transparent substrate;
a light source module array provided on a first surface of the transparent substrate and having a plurality of light source modules arranged in a lattice structure;
an optical array provided on a second surface of the transparent substrate and having a plurality of optical elements arranged to correspond to a plurality of the light source modules, respectively; and
an optical driving unit controlling the light source module array,
wherein an external light is provided to a user through a space between a plurality of the light source modules and a space between a plurality of the optical elements and
wherein a light beam according to an image generated by the optical driving unit is irradiated from the light source module array and provided to the user through the optical array.

2. The electronic device of claim 1, wherein an individual light source module of a plurality of the light source modules comprises an external light blocking member for blocking the external light from passing through the light source module and a light source device configured to irradiate the light beam.

3. The electronic device of claim 2, wherein the individual light source module further comprises a collimating lens for preventing the irradiated light beam from being dispersed and wherein the light source device is in contact with the transparent substrate with the collimating lens interposed therebetween.

4. The electronic device of claim 3, wherein the external light blocking member has a cap shape covering the light source device and the collimating lens.

5. he electronic device of claim 4, wherein optical characteristics of the collimating lens are the same for all the light source modules.

6. he electronic device of claim 3, wherein the transparent substrate is disposed such that the second surface faces the user.

7. The electronic device of claim 6, wherein the optical element is a lens and wherein an optical characteristic of the lens is determined based on a position of the optical element.

8. The electronic device of claim 6, wherein the optical element is a pinhole formed in a layer polarized in a first direction.

9. The electronic device of claim 8, wherein the light source module array irradiates a light beam polarized in a second direction orthogonal to the first direction.

10. The electronic device of claim 2, wherein the transparent substrate is disposed such that the first surface faces the user.

11. The electronic device of claim 10, wherein the optical element is a reflective lens and wherein an optical characteristic of the reflective lens is determined based on a position of the optical element.

12. The electronic device of claim 2, wherein an interval between a plurality of the light source modules increases as it moves toward the outside from a center of the light source module array.

13. The electronic device of claim 12, wherein the transparent substrate is planar or has a prescribed curvature.

14. The electronic device of claim 13, wherein each of the optical elements is aligned to the light source module therefor in a radial direction toward the transparent substrate from a pupil of the user.

15. The electronic device of claim 1, wherein the optical array comprises a Diffractive Optical Element (DOE) or a Holographic Optical Element (HOE).

16. The electronic device of claim 1, further comprising:
a front frame having the transparent substrate disposed thereon; and
a side frame having the optical driving unit disposed thereon.

17. The electronic device of claim 1, further comprising an image division circuit configured to divide the image generated by the optical driving unit and transmit the divided image to an individual light source module.

18. The electronic device of claim 1, wherein a scale of the lattice structure is determined based on at least one of a distance between the light source module array and a user pupil, a pupil size, or an optical wavelength band.

19. The electronic device of claim 2, wherein the light source device comprises a Liquid Crystal On Silicon (LCOS) device, a Liquid Crystal Display (LCD) device, an Organic Light Emitting Diode (OLED) device, a Digital Micromirror Device (DMD), a micro Light Emitting Diode (LED) device, and a Quantum Dot (QD) LED device.

20. The electronic device of claim 16, wherein the electronic device is a wearable display.
